# EUROPEAN PATENT SPECIFICATION

(11) **EP 1 953 367 B1**
(45) Date of publication and mention of the grant of the patent: **14.08.2019**
(21) Application number: 08250333.5
(22) Date of filing: 28.01.2008
(51) Int. Cl.: F02D 41/02, F02D 31/00, F02D 41/22, F02D 41/14, F16H 61/12, F16H 61/662

(54) **Vehicle engine idle speed control**
Leerlaufdrehzahlregelung für einen Fahrzeugmotor
Commande de vitesse de ralenti d'un moteur de véhicule

(30) Priority: 31.01.2007 JP 2007021239; 22.11.2007 JP 2007302500
(43) Date of publication of application: 06.08.2008
(73) Proprietor: Yamaha Hatsudoki Kabushiki Kaisha, Shizuoka-ken Shizuoka 438-8501 (JP)
(72) Inventor: Sawada, Yuichiro c/o Yamaha Hatsudoki Kabushiki Kaisha, Iwata-shi Shizuoka-ken 438-8501 (JP)
(74) Representative: Moreland, David

(56) References cited:
- EP-A1- 1 450 039
- WO-A1-96/23136
- DE-A1- 10 243 565
- JP-A- 2004 019 740
- US-A1- 2005 020 406
- US-B1- 6 231 478

## Description

The present invention relates to a vehicle, and a control device and a control method thereof. In particular, the present invention relates to a vehicle having an electronic continuously variable transmission and an idle speed control device, and a control device, and a control method thereof.

### BACKGROUND TO THE INVENTION

Continuously variable transmissions (hereinafter referred to as "CVT") that perform idle speed control (ISC) are known, for example, from JP-A-2004-19740. Specifically, ISC is a control which uses an ISC valve and the like to change a passage area of a by-pass passage or the like in order that the amount of intake air to an engine will be increased and decreased, thus adjusting the rotational speed of the engine at a time of idling (idle rotational speed).

Electronic continuously variable transmissions (hereinafter referred to as "ECVT") are also known. In an ECVT, the transmission gear ratio can be adjusted regardless of the rotational speed of the engine. Therefore, the ECVT is widely used for vehicles such as scooters.

When the ISC disclosed in JP-A-2004-19740 is applied to a vehicle provided with the ECVT, the vehicle may problematically increase speed even if the rider does not open the throttle. In other words, the vehicle may increase speed regardless of the rider's intention of decreasing speed. Therefore, resultant drivability is not desirable.

WO96/23136 describes a control system for controlling the idle speed of an internal combustion engine, wherein if an accelerator pedal is disengaged by a driver and the engine speed is less than an idle entry threshold, the control system enters an idle mode of operation and it checks to see whether the engine is connected to the vehicle drive line. If the engine is determined to be connected to the drive line, then the controller is configured to operate in an open loop idle control mode in which the fuelling rate of the engine is controlled as a function of engine or road speed to thereby control the engine speed at idle. If the engine is not connected to the drive train, the controller instead uses closed loop idle control.

US2005/0020406 describes an idle speed compensation system for a vehicle that includes an idle speed control system that varies airflow to an engine at idle. A controller communicates with a transmission sensor system to identify faults, such as a line pressure fault, a communication fault, or other faults. If the controller determines that a line pressure fault or a communication fault has occurred, then the controller proceeds to a step wherein the controller determines an idle speed compensation signal from a look up table and regulates the engine idle speed in accordance with the idle speed compensation signal.

The present invention has been made in view of the situation described above, and has an object to improve drivability of a vehicle provided with an ECVT and an idle speed control device.

### SUMMARY OF THE INVENTION

Various aspects of the present invention are defined in the independent claims. Some preferred features are defined in the dependent claims.

Described herein by way of example is a vehicle that includes: a drive wheel; an engine; an electronic continuously variable transmission having an input shaft connected to the engine and an output shaft to adjust a transmission gear ratio between the input shaft and the output shaft; a clutch located in the power transmission path between the engine and the drive wheel to be engaged and disengaged according to a rotational speed of the input shaft or output shaft; an idle speed control device for performing idle speed control to adjust an idle rotational speed of the engine; and a control unit for suppressing or stopping the idle speed control when the clutch is engaged.

Described herein by way of example is a vehicle that includes: a drive wheel; an engine; an electronic continuously variable transmission having an input shaft connected to the engine and an output shaft to adjust a transmission gear ratio between the input shaft and the output shaft; a clutch located between the output shaft and the drive wheel to be engaged and disengaged according to a rotational speed of the output shaft; an idle speed control device for performing idle speed control to adjust an idle rotational speed of the engine; and a control unit for suppressing or stopping the idle speed control when the clutch is engaged.

Described herein by way of example is a vehicle that includes: a drive wheel; an engine; an electronic continuously variable transmission having an input shaft connected to the engine and an output shaft to adjust a transmission gear ratio between the input shaft and the output shaft; a clutch located in the power transmission path between the engine and the drive wheel to be engaged and disengaged according to a rotational speed of the input shaft or output shaft; an idle speed control device for performing idle speed control to adjust an idle rotational speed of the engine; and a control unit for detecting the abnormality in the continuously variable transmission, and suppressing or stopping the idle speed control when the abnormality is detected in the continuously variable transmission.

Described herein by way of example is a vehicle that includes: a drive wheel; an engine; an electronic continuously variable transmission having an input shaft connected to the engine and an output shaft to adjust a transmission gear ratio between the input shaft and the output shaft; a clutch located in between the engine and the drive wheel to be engaged and disengaged according to a rotational speed of the input shaft or output shaft; an idle speed control device for performing idle speed control to adjust an idle rotational speed of the engine; and a control unit for detecting the abnormality in the continuously variable transmission, and suppressing or stopping the idle speed control when the abnormality is detected in the continuously variable transmission.

Described herein by way of example is a controller for a vehicle that is a controller for suppressing or stopping the idle speed control when the clutch is engaged. The vehicle includes: a drive wheel; an engine; an electronic continuously variable transmission having an input shaft connected to the engine and an output shaft to adjust a transmission gear ratio between the input shaft and the output shaft; a clutch located in the power transmission path between the engine and the drive wheel to be engaged and disengaged according to a rotational speed of the input shaft or output shaft; an idle speed control device for performing idle speed control to adjust an idle rotational speed of the engine. Described herein by way of example is a controller for a vehicle that is a controller that suppresses or stops the idle speed when the clutch is engaged. The vehicle includes: a drive wheel; an engine; an electronic continuously variable transmission having an input shaft connected to the engine and an output shaft to adjust a transmission gear ratio between the input shaft and the output shaft; a clutch located between the output shaft and the drive wheel to be engaged and disengaged according to a rotational speed of the output shaft; and an idle speed control device for performing idle speed control to adjust an idle rotational speed of the engine.

Described herein by way of example is a controller for a vehicle that detects the abnormality of a continuously variable transmission. When the controller detects the abnormality in the continuously variable transmission, the controller suppresses or stops an idle speed control. The vehicle includes: a drive wheel; an engine; an electronic continuously variable transmission having an input shaft connected to the engine and an output shaft to adjust a transmission gear ratio between the input shaft and the output shaft; a clutch located in the power transmission path between the engine and the drive wheel to be engaged and disengaged according to a rotational speed of the input shaft or output shaft; an idle speed control device for performing idle speed control to adjust an idle rotational speed of the engine.

Described herein by way of example is a controller for a vehicle that detects the abnormality of a continuously variable transmission. When the controller detects the abnormality in the continuously variable transmission, the controller suppresses or stops an idle speed control. The vehicle includes: a drive wheel; an engine; an electronic continuously variable transmission having an input shaft connected to the engine and an output shaft to adjust a transmission gear ratio between the input shaft and the output shaft; a clutch located between the output shaft and the drive wheel to be engaged and disengaged according to a rotational speed of the output shaft; and an idle speed control device for performing idle speed control to adjust an idle rotational speed of the engine.

Described herein by way of example is a control method for a vehicle that is a method to suppress or stop an idle speed control when a clutch is engaged. The vehicle includes: a drive wheel; an engine; an electronic continuously variable transmission having an input shaft connected to the engine and an output shaft to adjust a transmission gear ratio between the input shaft and the output shaft; a clutch located in the power transmission path between the engine and the drive wheel to be engaged and disengaged according to a rotational speed of the input shaft or output shaft; an idle speed control device for performing idle speed control to adjust an idle rotational speed of the engine.

Described herein by way of example is a control method for a vehicle that is a method to suppress or stop an idle speed control. The vehicle includes: a drive wheel; an engine; an electronic continuously variable transmission having an input shaft connected to the engine and an output shaft to adjust a transmission gear ratio between the input shaft and the output shaft; a clutch located between the output shaft and the drive wheel to be engaged and disengaged according to a rotational speed of the output shaft; and an idle speed control device for performing idle speed control to adjust an idle rotational speed of the engine.

Described herein by way of example is a control method for a vehicle that is a method to detect the abnormality of a continuously variable transmission and to suppress or stop an idle speed control when the abnormality is detected. The vehicle includes: a drive wheel; an engine; an electronic continuously variable transmission having an input shaft connected to the engine and an output shaft to adjust a transmission gear ratio between the input shaft and the output shaft; a clutch located in the power transmission path between the engine and the drive wheel to be engaged and disengaged according to a rotational speed of the input shaft or output shaft; an idle speed control device for performing idle speed control to adjust an idle rotational speed of the engine.

Described herein by way of example is a control method for a vehicle that is a method to detect the abnormality of a continuously variable transmission and to suppress or stop an idle speed control when the abnormality is detected. The vehicle includes: a drive wheel; an engine; an electronic continuously variable transmission having an input shaft connected to the engine and an output shaft to adjust a transmission gear ratio between the input shaft and the output shaft; a clutch located between the output shaft and the drive wheel to be engaged and disengaged according to a rotational speed of the output shaft; and an idle speed control device for performing idle speed control to adjust an idle rotational speed of the engine.

Described herein by way of example is a vehicle comprising:
a drive wheel;
an engine;
an electronic continuously variable transmission having an input shaft and an output shaft;
a clutch;
an idle speed control device for performing idle speed control to adjust an idle rotational speed of the engine; and
a control unit for suppressing or stopping the idle speed control when at least one of the clutch is engaged and the control unit detects an abnormality in the continuously variable transmission.

The clutch may be located in a power transmission between the engine and the drive wheel and may be adapted to be engaged or disengaged according to the rotational speed of the input shaft or the output shaft.

The clutch is located between the output shaft and the drive wheel and is adapted to be engaged or disengaged according to the rotational speed of the output shaft.

The clutch may include a first clutch member connected directly or indirectly to the output shaft, and a second clutch member connected directly or indirectly to the drive wheel. The second clutch member may be adapted to be engaged with or disengaged with the first clutch member according to the rotational speed of the output shaft. The control unit may determine an engaged or disengaged state of the clutch based on the rotational speed of the first clutch member or based on the difference of the rotational speed between the first clutch member and the second clutch member.

The vehicle may further comprise:
an input shaft rotational speed sensor for detecting the rotational speed of the input shaft;
a throttle opening degree sensor; and
a vehicle speed sensor;
wherein the continuously variable transmission further has a transmission control system for controlling the transmission gear ratio, and a transmission gear ratio sensor for detecting the transmission gear ratio; and
wherein an abnormality in the continuously variable transmission includes at least one of an abnormality in the transmission control system, an abnormality in the input shaft rotational speed sensor, an abnormality in the throttle opening degree sensor, an abnormality in the vehicle speed sensor, and an abnormality in the transmission gear ratio sensor.

Described herein by way of example is a controller for a vehicle, said vehicle comprising:
a drive wheel;
an engine;
an electronic continuously variable transmission having an input shaft and an output shaft;
a clutch; and
an idle speed control device for performing idle speed control to adjust an idle rotational speed of the engine;
wherein the controller suppresses or stops the idle speed control when at least one of the clutch is engaged and the controller detects an abnormality in the continuously variable transmission.

The clutch may be located in a power transmission between the engine and the drive wheel and may be adapted to be engaged or disengaged according to the rotational speed of the input shaft or the output shaft.

The clutch is located between the output shaft and the drive wheel and is adapted to be engaged or disengaged according to the rotational speed of the output shaft.

Described herein by way of example is a control method for a vehicle, said vehicle comprising:
a drive wheel;
an engine;
an electronic continuously variable transmission having an input shaft and an output shaft;
a clutch; and
an idle speed control device for performing idle speed control to adjust an idle rotational speed of the engine;
wherein the control method suppresses or stops the idle speed control when at least one of the clutch is engaged and the control method detects an abnormality in the continuously variable transmission.

The clutch may be located in a power transmission between the engine and the drive wheel and may be adapted to be engaged or disengaged according to the rotational speed of the input shaft or the output shaft.

The clutch is located between the output shaft and the drive wheel and is adapted to be engaged or disengaged according to the rotational speed of the output shaft.

The input shaft of the continuously variable transmission may be connected to the engine, and the transmission is preferably adapted to adjust a gear ratio between the input shaft and the output shaft.

The present invention will improve the drivability of a vehicle provided with an ECVT and an idle speed control device.

### BRIEF DESCRIPTION OF THE DRAWINGS

These and other aspect of the present invention will now be described, by way of example only, with reference to the accompanying drawings, in which:
FIG. 1 is a side view of a two-wheeled motorized vehicle in accordance with a first embodiment of the present invention;
FIG. 2 is a sectional view of an engine unit;
FIG. 3 is a partial cross-sectional view illustrating the constitution of a CVT;
FIG. 4 is a cross-sectional view illustrating components in the vicinity of an air intake pipe of an engine;
FIG. 5 is a block diagram illustrating a system for controlling the two-wheeled motorized vehicle;
FIG. 6 is a flow chart illustrating the ISC F/B control;
FIG. 7 is a flow chart illustrating the control to suppress or stop the ISC F/B control on the basis of the state of the engagement of the centrifugal clutch;
FIG. 8 is a flow chart illustrating the control to suppress or stop the ISC F/B control on the basis of abnormality in the transmission in an example departing from the present invention;
FIG. 9 is a cross-sectional view illustrating components in the vicinity of an air intake pipe of an engine in a modified example of the first embodiment;
FIG. 10 is a cross-sectional view illustrating components in the vicinity of an air intake pipe of an engine in a further modified example of the first embodiment; and
FIG. 11 is a block diagram illustrating a control system in accordance with an example departing from the present invention.

### DETAILED DESCRIPTION OF THE DRAWINGS

As a result of strenuous research, the inventors of the present invention have found the reason why a vehicle increases speed while the throttle is closed for the first time ever, and the inventors have made an embodiment described below. Before a vehicle according to an embodiment of the present invention is described in detail, the reason why a vehicle increases speed while the throttle is closed, which has been found by the inventors, will be described.

For example, in a case of a CVT using a centrifugal weight, the transmission gear ratio is decided according to the rotational speed of an engine. Specifically, when the rotational speed of the engine is relatively high, the transmission gear ratio becomes relatively small. On the other hand, when the rotational speed of the engine is relatively low, the transmission gear ratio becomes relatively large. In a vehicle provided with an ECVT, however, the transmission gear ratio can be changed regardless of the rotational speed of an engine 10 as described above. Accordingly, there can be a situation in which the transmission gear ratio is small even when the rotational speed of the engine is low.

When the transmission gear ratio is small, the rotational speed of the output shaft of the ECVT becomes relatively high. Accordingly, when the transmission gear ratio is small, the rotational speed of the output shaft of the ECVT becomes relatively high regardless of the fact that the rotational speed of the engine is low. As a result, a state can be generated in which a centrifugal clutch attached to the output shaft is not disengaged. In other words, there can be a situation in which the centrifugal clutch is kept engaged regardless of the fact that the rotational speed of the engine is low.

Further, when the transmission gear ratio is small, the load on the engine becomes relatively large. Therefore, the rotational speed of the engine becomes lower than a target rotational speed. Accordingly, the ISC is activated to increase the rotational speed of the engine.

As described above, when the transmission gear ratio is kept small, the ISC may be actuated with the centrifugal clutch kept engaged, even if the rotational speed of the engine is low. Accordingly, even when the rider closes the throttle in order to decrease speed of the vehicle provided with the ECVT, the ISC may be activated to problematically increase speed of the vehicle, because of the transmission gear ratio is relatively small. The inventors have found the fact described above for the first time ever, and the inventors have made an embodiment described below.

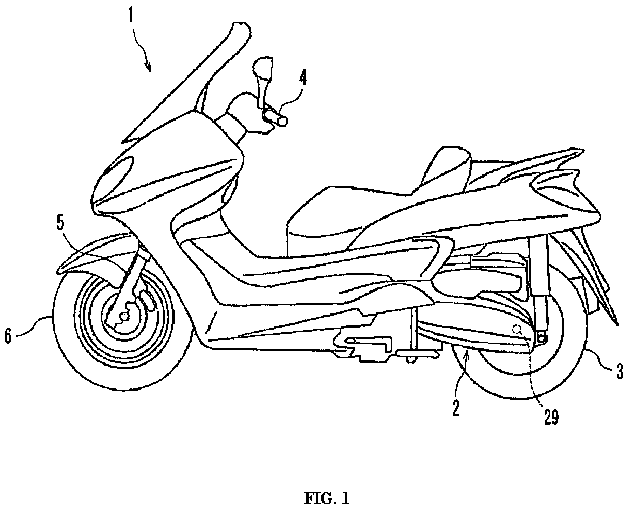

An embodiment of the present invention will be hereinafter described in detail, using a two-wheeled motorized vehicle 1 shown in FIG. 1. The embodiment of the present invention is described by using a so-called scooter-type two-wheeled motorized vehicle 1 as an example. However, a vehicle according to the invention is not limited to the so-called scooter-type two-wheeled motorized vehicle. For example, the vehicle in the present invention may be a two-wheeled motorized vehicle other than scooter-type vehicle. Specifically, the vehicle of the present invention may be a two-wheeled motorized vehicle of an off-road type, a motorcycle type, a scooter type, or a so-called moped type. Also, other than a two-wheeled motorized vehicle, the vehicle in the invention may be a straddle-type vehicle. Specifically, the vehicle of the present invention may be, for example, an ATV (All Terrain Vehicle) or the like. Further, the vehicle in the invention may be a vehicle other than straddle type vehicle, such as a four-wheeled motorized vehicle.

Further, the two-wheeled motorized vehicle 1 provided with a belt type ECVT will be described as an example in the present embodiment. The vehicle according to the present invention, however, is not limited to the vehicle constituted as described above. For example, the vehicle according to the present invention may be a vehicle having an ECVT of a type other than the belt type. The vehicle according to the present invention may be, for example, a vehicle having an ECVT of a toroidal type or the like.

FIG. 1 shows a side view of a two-wheeled motorized vehicle 1. The two-wheeled motorized vehicle 1 has a body frame (not shown). An engine unit 2 is suspended from the body frame. A rear wheel 3 is provided at a rear end of the engine unit 2. In the embodiment of the invention, the rear wheel 3 forms a drive wheel for driving a wheel with power outputted from the engine unit 2.

The body frame has a head pipe (not shown) extending downward from steering handlebars 4. Front forks 5 are connected to a bottom end of the head pipe. A front wheel 6 is rotatably attached to lower ends of the front forks 5. The front wheel 6, which is not drivingly connected to the engine unit 2, forms a driven wheel.

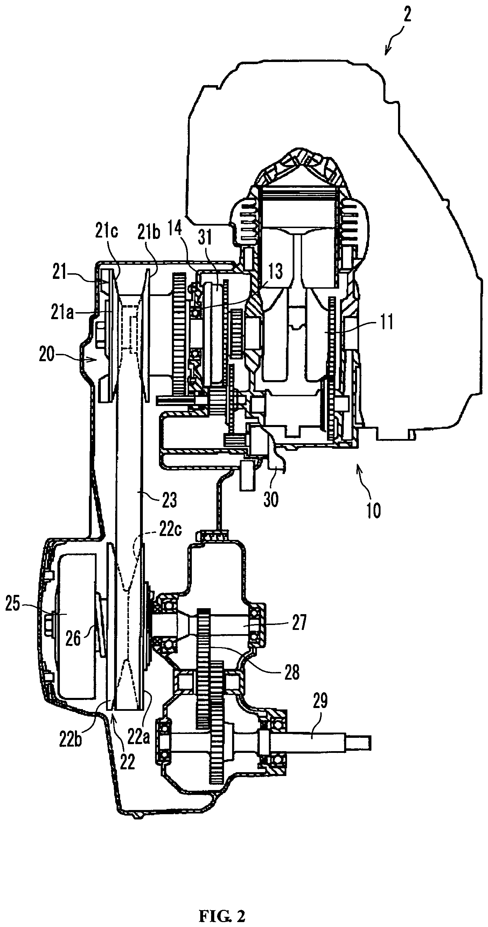

The constitution of the engine unit 2 will now be described with reference to FIG. 2 to FIG. 4.

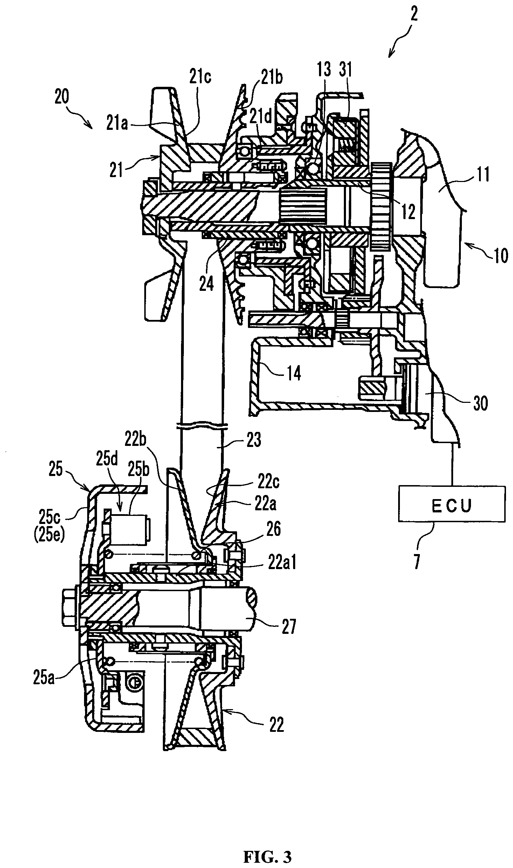

As shown in FIG. 2 and FIG. 3, the engine unit 2 has an engine (internal combustion engine) 10 and a transmission 20. In the embodiment of the invention, the engine 10 is described as a forced-air-cooled four-stroke engine. However, the engine 10 may be any other suitable type of engine. For example, the engine 10 may be a water-cooled engine, oil-cooled engine or the like. The engine 10 may be a two-stroke engine, for example.

As shown in FIG. 3, the engine 10 has a crankshaft 11. A sleeve 12 is spline-fitted onto an outer circumference of the crankshaft 11. The sleeve 12 is rotatably supported by a housing 14 via a bearing 13. A one-way clutch 31 connected to an electric motor 30 is attached to the outer circumference of the sleeve 12.

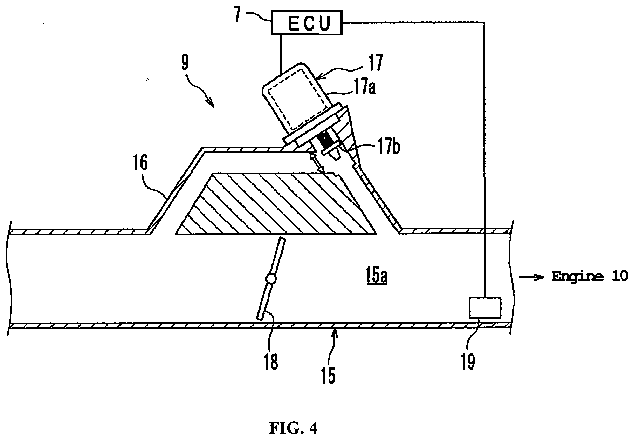

FIG. 4 is a cross-sectional view illustrating components in the vicinity of an air intake pipe 15 connected to the engine 10. The air intake pipe 15 supplies the engine 10 with air. A throttle valve 18 as an air intake pipe valve is located in the air intake pipe 15. The throttle valve 18 adjusts the amount of air flowing in the air intake pipe 15 by adjusting the area of an air passage in the air intake pipe 15. The throttle valve 18 is operated by a throttle (not shown). As the throttle is opened, the throttle valve 18 is opened to increase the amount of air flowing in the air intake pipe 15.

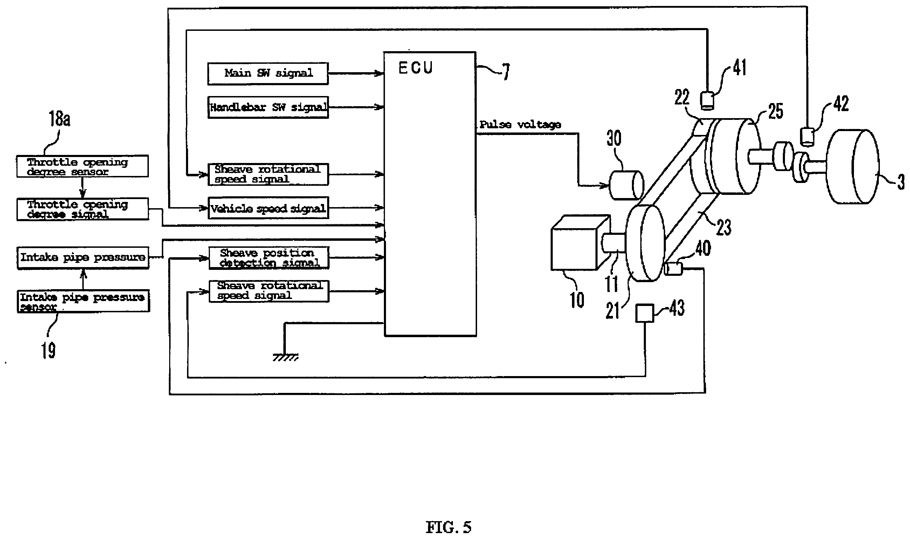

A throttle opening degree sensor 18a (refer to FIG. 5) is attached to the throttle valve 18. The opening degree of the throttle valve 18 is detected by the throttle opening degree sensor 18a.

An air intake pipe pressure sensor 19 is located in the air intake pipe 15. Specifically, the air intake pipe pressure sensor 19 is located in a downstream section 15a of the air intake pipe 15 on the engine 10 side with respect to the throttle valve 18. The pressure of the downstream section 15a is detected by the air intake pipe pressure sensor 19. As shown in FIG. 5, the air intake pipe pressure sensor 19 outputs to an ECU 7the pressure of the downstream section 15a as intake pipe pressure.

An ISC device 9 which adjusts the rotational speed of the engine at a time of idling of the two-wheeled motorized vehicle 1 by adjusting the amount of air flowing in the air intake pipe 15 is attached to the air intake pipe 15. Specifically, the ISC device 9 is constituted by a by-pass pipe 16, an air quantity adjusting device 17, and the ECU 7. The by-pass pipe 16 bypasses a section of the air intake pipe 15 in which the throttle valve 18 is located. In other words, the by-pass pipe 16 connects the upstream side and the downstream side of the air intake pipe 15 with respect to the throttle valve 18. The air quantity adjusting device 17 adjusts the amount of air flowing in the air intake pipe 15 by adjusting an area of an air passage in the by-pass pipe 16. Specifically, the air quantity adjusting device 17 is provided with an actuator 17a and a by-pass pipe valve 17b actuated by the actuator 17a. The by-pass pipe valve 17b is located in the by-pass pipe 16. The by-pass pipe valve 17b adjusts the amount of air flowing in the by-pass pipe 16 by adjusting an area of an air passage in the by-pass pipe 16. The actuator 17a can be constituted, for example, by a stepper motor or the like.

In the present embodiment, the transmission 20 is a belt type ECVT . The transmission 20, however, is not limited to a belt type ECVT . The transmission 20 may be, for example, a toroidal type ECVT .

As shown in FIG. 2 and FIG. 3, the transmission 20 is provided with a primary sheave 21, a secondary sheave 22, and a V-belt 23. The V-belt 23 is wrapped around the primary sheave 21 and the secondary sheave 22. The V-belt may be of any suitable form, and may be a rubber belt type, resin block belt type, or the like.

The primary sheave 21 rotates together with the crankshaft 11. The primary sheave 21 includes a fixed sheave half 21a and a movable sheave half 21b. The fixed sheave half 21a is fixed to one end of the crankshaft 11. The movable sheave half 21b is located opposed to the fixed sheave half 21a. The movable sheave half 21b is movable in the axial direction of the crankshaft 11. One surface of the fixed sheave half 21a and one surface of the movable sheave half 21b are opposed to each other, which form a belt groove 21c into which the V-belt 23 is wrapped. As shown in FIG. 3, the movable sheave half 21b has a boss section 21d in a cylindrical shape through which the crankshaft 11 penetrates. A slider 24 in a cylindrical shape is fixed in the boss section 21d. The movable sheave half 21b integral with the slider 24 is movable in the axial direction of the crankshaft 11. Accordingly, the width of the belt groove 21c may vary.

The width of the belt groove 21c of the primary sheave 21 is varied as the movable sheave half 21b is driven in the axial direction of the crankshaft 11 by an electric motor 30. The electric motor 30 may be also used as a starter motor.

The secondary sheave 22 is located rearward of the primary sheave 21. The secondary sheave 22 is mounted to a driven shaft 27 via a centrifugal clutch 25. To be more specific, the secondary sheave 22 includes a fixed sheave half 22a and a movable sheave half 22b. The movable sheave half 22b is opposed to the fixed sheave half 22a. The fixed sheave half 22a is connected to the driven shaft 27 via the centrifugal clutch 25. The movable sheave half 22b is movable in the axial direction of the driven shaft 27. One surface of the fixed sheave half 22a and one surface of the movable sheave half 22b are opposed to each other, which form a belt groove 22c into which the V-belt 23 is wrapped.

The movable sheave half 22b is urged by a spring 26 in a direction to decrease the width of the belt groove 22c. Consequently, the width of the belt groove 21c of the primary sheave 21 becomes small, and the winding diameter of the V-belt 23 around the primary sheave 21 becomes large. As a result, the V-belt 23 is pulled inward in the radial direction on the side of the secondary sheave 22. Thus, the movable sheave half 22b moves against the urging force of the spring 26 in a direction to increase the width of the belt groove 22c. Therefore, the diameter with which the V-belt 23 is wrapped around the secondary sheave 22 decreases.

The centrifugal clutch 25 is provided with a centrifugal plate 25a, a centrifugal weight 25b, and a clutch housing 25c. The centrifugal plate 25a rotates together with the fixed sheave half 22a. The centrifugal weight 25b is supported by the centrifugal plate 25a such that it is displaceable in the radial direction of the centrifugal plate 25a.

In the present embodiment, a first clutch member 25d is constituted by the centrifugal plate 25a and the centrifugal weight 25b. An output shaft 22a1 of the transmission 20 is formed integrally on the fixed sheave half 22a of the secondary sheave 22. Specifically, the output shaft 22a1 of the transmission 20 is constituted by a cylindrical section of the fixed sheave half 22a in which the driven shaft 27 is inserted.

A second clutch member 25e is constituted by the clutch housing 25c. The clutch housing 25c is fixed to one end of the driven shaft 27. A speed reducing mechanism 28 is connected to the driven shaft 27. The driven shaft 27 is connected to an axle 29 via the speed reducing mechanism 28. The rear wheel 3 is mounted to the axle 29. Therefore, the clutch housing 25c is connected to the drive wheel or the rear wheel 3 via the driven shaft 27, the speed reducing mechanism 28 and the axle 29. The clutch housing 25c is engaged with and disengaged from the first clutch member 25d according to the rotational speed of the output shaft 22a1. Specifically, when the rotational speed of the output shaft 22a1 reaches a predetermined rotational speed or becomes larger than the predetermined rotational speed, the centrifugal weight 25b is moved outward in the radial direction of the centrifugal plate 25a by centrifugal force and comes in contact with the clutch housing 25c. As a result, the first clutch member 25d is engaged with the clutch housing 25c as the second clutch member 25e. When the first clutch member 25d is engaged with the clutch housing 25c, the rotation of the output shaft 22a1 is transmitted to the rear wheel 3 as the drive wheel via the clutch housing 25c, the driven shaft 27, the speed reducing mechanism 28, and the axle 29. On the other hand, when the rotational speed of the output shaft 22a1 becomes lower than the predetermined rotational speed, the centrifugal force applied to the centrifugal weight 25b is decreased, and the centrifugal weight 25b is detached from the clutch housing 25c. Therefore, the rotation of the output shaft 22a1 is not transmitted to the clutch housing 25c. Consequently, the rear wheel 3 does not rotate.

A system for controlling the two-wheeled motorized vehicle 1 will now be described in detail with reference to FIG. 5. The two-wheeled motorized vehicle 1 has the ECU 7 as a controller. The transmission 20, the engine 10, and so forth are controlled by the ECU 7.

As shown in FIG. 5, a sheave position sensor 40 is connected to the ECU 7. In the present embodiment, a transmission gear ratio sensor for detecting the transmission gear ratio of the transmission 20 is constituted by the sheave position sensor 40. The sheave position sensor 40 is, as it were, the sensor for detecting the state of a movable section of the transmission 20. The sheave position sensor 40 detects the transmission gear ratio of the transmission 20 by detecting the state of the movable section of the transmission 20. The sheave position sensor 40 detects the position of the movable sheave half 21b of the primary sheave 21. The sheave position sensor 40 outputs the detected position of the movable sheave half 21b as a sheave position detection signal to the ECU 7. The sheave position sensor 40 may be formed by a potentiometer, for example.

In addition, a primary sheave rotation sensor 43, a secondary sheave rotation sensor 41, and a vehicle speed sensor 42 are connected to the ECU 7. The primary sheave rotation sensor 43 detects the rotational speed of the primary sheave 21. The primary sheave rotation sensor 43 outputs a primary sheave rotational speed signal to the ECU 7 on the basis of the detected rotational speed of the primary sheave 21. The secondary sheave rotation sensor 41 detects a rotational speed of the secondary sheave 22. The secondary sheave rotation sensor 41 outputs a secondary sheave rotational speed signal to the ECU 7 on the basis of the detected rotational speed of the secondary sheave 22. The vehicle speed sensor 42 detects the rotational speed of the rear wheel 3. The vehicle speed sensor 42 outputs to the ECU 7 a vehicle speed signal based on the detected rotational speed.

A handlebar switch attached to the steering handlebars 4 is connected to the ECU 7. The handlebar switch outputs a handlebar SW signal when a rider operates the handlebar switch.

As described above, a throttle opening sensor 18a outputs a throttle opening signal to the ECU 7.

The ECU 7 controls the sheave position of the movable sheave half 21b of the primary sheave 21 on the basis of the vehicle speed signal output from the vehicle speed sensor 42. Specifically, a target transmission gear ratio is decided depending on the throttle opening degree and the vehicle speed in the ECU 7. The ECU 7 calculates a target sheave position based on the determined target change-gear ratio. The sheave position of the movable sheave, half 21b of the primary sheave 21 is controlled according to the calculated sheave target position.

The driving system of the electric motor 30 is not specifically limited. In the present embodiment, the electric motor 30 is driven by a pulse width modulation (PWM) drive. Specifically, the ECU 7 is provided with a drive circuit (not shown) for the electric motor 30 and a CPU (central processing unit) (not shown) for outputting a signal to the drive circuit. The CPU outputs a pulse width modulation signal to the drive circuit. The drive circuit applies the pulse voltage in accordance with the pulse width modulation signal to the electric motor 30. The electric motor 30 is thus driven. However, the electric motor 30 may be a stepper motor type or the like.

The idle speed control (ISC) feed back control (hereafter referred to as "ISC F/B") is a control for changing the engine rotational speed of the engine 10 in the idling state. The ISC F/B is the control which, for example, increases the idle rotational speed in order to warm up the two-wheeled motorized vehicle 1 promptly at a time of idling.

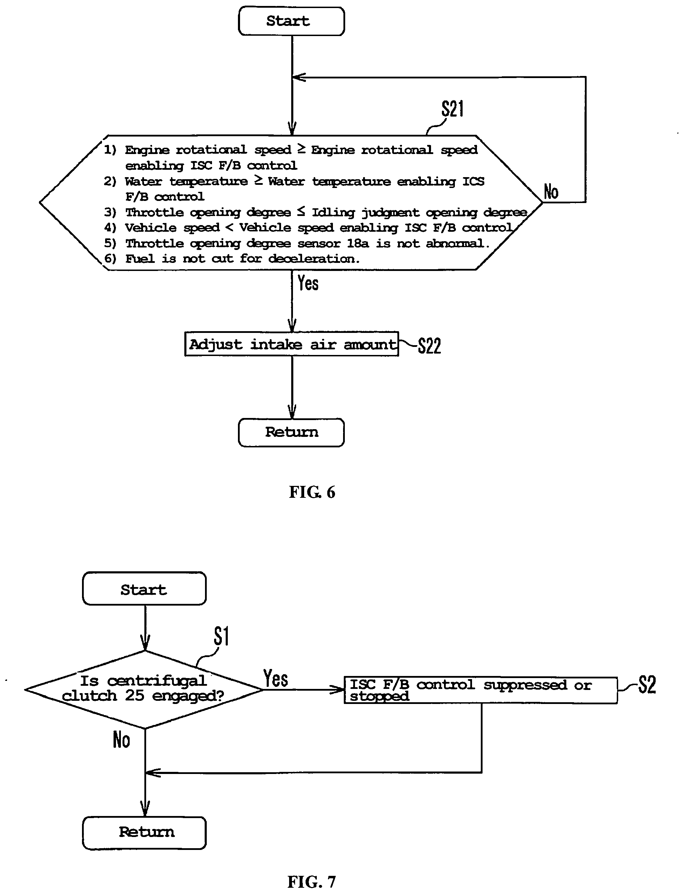

Specifically, the ISC F/B control is performed according to the flow chart shown in FIG. 6 in the embodiment. Whether the following conditions 1) to 6) are satisfied is judged in step S21 first. If the following conditions 1) to 6) are judged to be satisfied in step S21, the procedure proceeds to step S22 where the amount of intake air to the engine 10 is adjusted. Specifically, the amount of intake air to the engine 10 is increased or decreased. For instance, if the amount of intake air to the engine 10 is to be increased, the by-pass pipe valve 17b is actuated by the actuator 17a, the air passage area in the by-pass pipe 16 is expanded, and the amount of intake air to the engine 10 is increased.

On the other hand, if the following conditions 1) to 6) are judged not to be satisfied in step S21, the procedure returns to step S21 again.
1) Engine rotational speed ≥ Engine rotational speed enabling the ISC F/B control
2) Cooling water temperature of the engine 10 ≥ Water temperature enabling the ICS F/B control
3) Throttle opening degree ≤ Idling judgment opening degree
4) Vehicle speed of the two-wheeled motorized vehicle 1 < Vehicle speed enabling the ISC F/B control
5) The throttle opening degree sensor 18a is not abnormal.
6) Fuel is not cut for deceleration.

Conditions 1) and 2) in step S21 are the conditions to avoid the engine 10 from stopping. The engine rotational speed enabling the ISC F/B control in condition 1) can be set, for example, to 500 rpm. The engine rotational speed enabling the ISC F/B control in condition 1) and the water temperature enabling the ISC F/B control in condition 2) can be appropriately set according to the type of the two-wheeled motorized vehicle 1, the use environment thereof, and so forth.

Conditions 3) and 4) in step S21 are the conditions to judge whether or not the two-wheeled motorized vehicle 1 is in a state of idling with vehicle speed not very high. The idling judgment opening degree in condition 3) and the vehicle speed enabling the ISC F/B control in condition 4) can be also appropriately set according to the type of the two-wheeled motorized vehicle 1, the use environment thereof, and so forth.

Condition 6) in step S21 is the condition to judge whether or not fuel has already been cut for deceleration as a result of any control other than the ISC F/B control.

In the present embodiment, the ISC F/B control described above is suppressed or stopped on the basis of the flow chart shown in FIG. 7. Specifically, the ISC F/B control is suppressed or stopped when the centrifugal clutch 25 is engaged.

As shown in FIG. 7, whether or not the centrifugal clutch 25 is engaged is judged in step S1. Specifically, whether or not the first clutch member 25d and the second clutch member 25e are engaged is judged in step S1.

The method for judging whether or not the centrifugal clutch 25 is engaged is not limited to any specific method. For instance, whether or not the centrifugal clutch 25 is engaged may be judged depending on the rotational speed of the first clutch member 25d detected by the secondary sheave rotation sensor 41. Specifically, it is possible to judge that the centrifugal clutch 25 is engaged when the rotational speed of the first clutch member 25d and the driven shaft 27 is equal to or higher than a predefined rotational speed.

Further, whether or not the centrifugal clutch 25 is engaged may be judged depending on the amount of difference between the rotational speed of the first clutch member 25d and the driven shaft 27 and the rotational speed of the second clutch member 25e. Specifically, it is possible to judge that the centrifugal clutch 25 is engaged when the rotational speed of the first clutch member 25d and the driven shaft 27 is practically equal to the rotational speed of the second clutch member 25e.

If it is judged in step S1 that the centrifugal clutch 25 is engaged, the ISC F/B control is suppressed or stopped. In order to suppress the ISC F/B control, the gain of the ISC F/B control may be decreased.

The speed of the two-wheeled motorized vehicle 1 may be increased regardless of the fact that the throttle is closed. This happens when the centrifugal clutch 25 is engaged. When the centrifugal clutch 25 is not engaged, the power of the engine 10 is not transmitted to the rear wheel 3. Accordingly, the speed of the two-wheeled motorized vehicle 1 is not increased while the throttle is closed. In the present embodiment, the ISC F/B control is suppressed or stopped when the centrifugal clutch 25 is engaged. As a result, the embodiment avoids the state in which the speed of the two-wheeled motorized vehicle 1 is increased against the rider's intention. Therefore, excellent drivability is achieved.

The ISC F/B control is the control which adjusts the rotational speed of the engine at a time of idling of the two-wheeled motorized vehicle 1. Therefore, the ISC F/B control is not necessary in particular when the rotational speed of the engine is relatively high so that the centrifugal clutch 25 is engaged. Accordingly, problems as minimized even if the ISC F/B control is suppressed or stopped while the centrifugal clutch 25 is engaged.

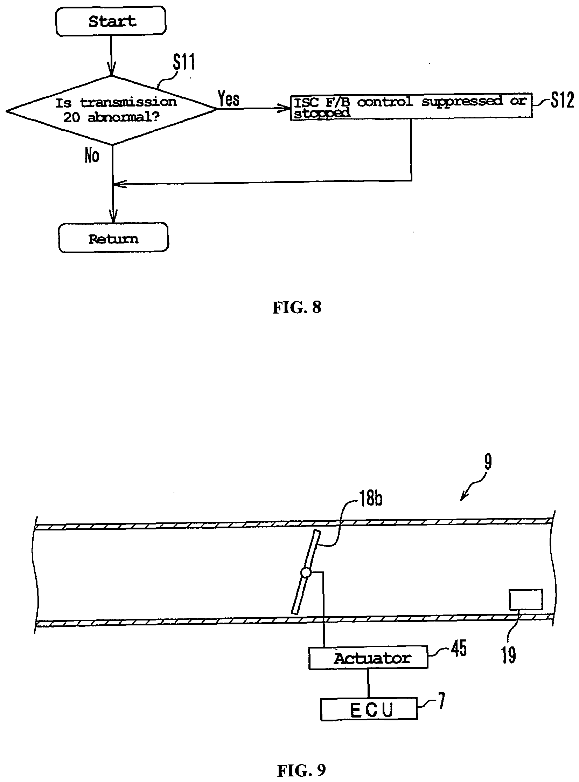

The example in which the ISC F/B control is suppressed or stopped when the centrifugal clutch 25 is engaged is described with reference to the embodiment above. In an example departing from the present invention, the ISC F/B control may be suppressed or stopped when abnormality occurs in the transmission 20 as described below. Suppressing and stopping the ISC F/B control according to this example will be described hereinafter with reference to FIG. 8. Operations other than suppressing and stopping the ISC F/B control are the same as those in the embodiment above, and FIGs. 1 to 6 are also referred to.

As shown in FIG. 8, whether or not abnormality in the transmission 20 has occurred is judged in step S11. When it is judged in step S11 that abnormality has occurred in the transmission 20, the procedure proceeds to step S12, and the ISC F/B control is suppressed or stopped. Suppressing or stopping the ISC F/B control performed in step S12 is the same as suppressing and stopping the ISC F/B control performed in step S2.

The "abnormality in the transmission 20" indicates that the control of the transmission gear ratio is not performed as usual in the transmission 20. Specifically, the "abnormality in the transmission 20" includes a case in which at least one of abnormality in the primary sheave rotation sensor 43 as the input shaft rotational speed sensor, abnormality in the throttle opening degree sensor 18a, abnormality in the vehicle speed sensor 42, abnormality in a transmission mechanism of the transmission 20 excluding the ECU 7, abnormality in the transmission control system including the ECU 7, wiring connecting the ECU 7 and the transmission mechanism, and so forth, abnormality in the sheave position senor 40 as the transmission gear ratio sensor, abnormality in the secondary sheave rotation sensor 41, and the so forth has occurred.

The transmission gear ratio of the transmission 20 may be kept relatively high regardless of the fact that the throttle is closed when, for example, abnormality has occurred in the transmission 20. Therefore, an occurrence of a state in which the speed of the vehicle is increased against the rider's intention can be avoided by suppressing or stopping the ISC F/B control when abnormality has occurred in the transmission 20.

One example of an embodiment according to the present invention has been described with reference to the two-wheeled motorized vehicle 1 provided with the ISC device 9 provided with the by-pass pipe 16. The ISC device 9 in the present invention, however, is not limited to the ISC device having the by-pass pipe. The ISC device 9 may be, for example, an ISC device in which a throttle valve 18b of an electronic control type actuated by an actuator 45 is used, as shown in FIG. 9. In the ISC device 9 shown in FIG. 9, the opening degree of the throttle valve 18b is electronically controlled by the ECU 7.

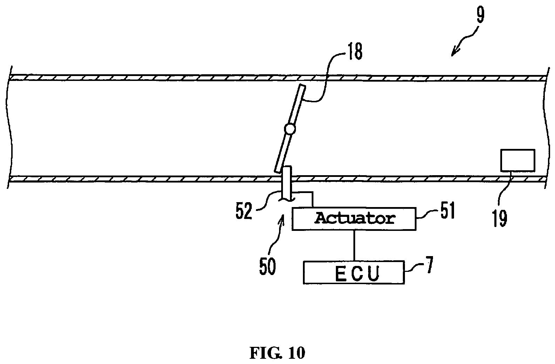

Further, as shown in FIG. 10, the ISC device 9 may be constituted by a throttle opening degree adjusting device 50 for forcibly adjusting the opening degree of the throttle valve 18 of a non-electronic control type and the ECU 7. The throttle opening degree adjusting device 50 may be constituted by, for example, a pressing member 52 for pressing the throttle valve 18 and an actuator 51 for actuating the pressing member 52. Specifically, the throttle opening degree adjusting device 50 may be constituted by, for example, a solenoid element.

The centrifugal clutch 25 of the embodiment first described above is located between the output shaft 22a1 and the rear wheel 3. In an example departing from the present invention, the centrifugal clutch 25 may be located between the crankshaft 11 as an input shaft and the primary sheave 21. In this configuration, the centrifugal clutch 25 does not have to be engaged or disengaged according to the rotational speed of the output shaft 22a1, but may be engaged or disengaged according to the rotational speed of the crankshaft 11 as an input shaft.

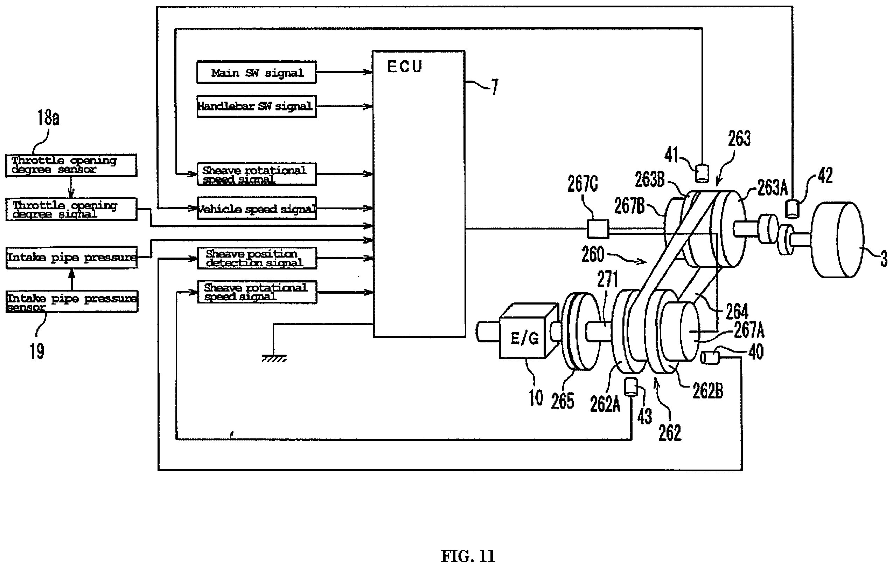

FIG. 11 is a block diagram illustrating a system for controlling a two-wheeled motorized vehicle in accordance with this example. Here, variable transmission 260 is a belt type ECVT. However, the belt of the variable transmission 260 in accordance with this example is a so-called metal belt 264.

The actuator of ECVT in the first described embodiment is the electric motor 30. However, the actuator of ECVT is not limited to the electric motor 30. The actuator of ECVT in the present example, described below, is a hydraulic actuator.

A clutch in the first described embodiment is the centrifugal clutch 25 which is mechanically engaged or disengaged according to the rotational speed of the output shaft 22a1 of the transmission mechanism 20. However, in the present invention, any type of clutch is acceptable as long as it is engaged or disengaged according to the rotational speed of the output shaft of the transmission mechanism. A clutch does not have to be engaged or disengaged mechanically according to the rotational speed. A clutch may be controlled to be engaged or disengaged according the rotational speed. Specifically, in the present example, an electrically controlled multiple friction clutch 265 is used.

As shown in FIG. 11, a two-wheeled motorized vehicle includes the electrically controlled multiple friction clutch 265 and the ECVT type variable transmission 260. The variable transmission 260 includes a primary sheave 262, a secondary sheave 263, and the metal belt 264 wound around the primary sheave 262 and the secondary sheave 263. The primary sheave 262 includes a fixed sheave half 262A and a movable sheave half 262B. The secondary sheave 263 includes a fixed sheave half 263A and a movable sheave half 263B.

A primary sheave rotation sensor 43 is equipped to the primary sheave 262. A secondary sheave rotation sensor 41 is equipped to the secondary sheave 263.

The two-wheeled motorized vehicle includes a hydraulic cylinder 267A, a hydraulic cylinder 267B, and a hydraulic control valve 267C connected to the hydraulic cylinder 267A and 267B. The hydraulic cylinder 267A adjusts the groove width of the primary sheave 262 by driving the movable sheave half 262B of the primary sheave 262. The hydraulic cylinder 267B adjusts the groove width of the secondary sheave 263 by driving the movable sheave half 263B of the secondary sheave 263. The hydraulic control valve 267C is a valve that adjusts the hydraulic pressure applied to the hydraulic cylinder 267A and 267B. The hydraulic control valve 267C controls the hydraulic cylinder 267A and 267B in the way when either one of them has higher hydraulic pressure the other one has lower hydraulic pressure. This hydraulic control valve 267C is controlled by ECU7.

The multiple friction clutch 265 is located between the engine 10 and the input shaft 271 of the variable transmission 260, and controlled depending on the rotational speed of the engine 10. For example, the multiple friction clutch 265 is controlled in such a way that it is connected when the speed of the engine 10 exceeds the predetermined value or higher and it is disconnected when the speed of the engine 10 is below the predetermined value.

The same control as in the first described embodiment is also performed in the present described example shown in Fig. 11. That is, ISC F/B control is suppressed or stopped when the multiple friction clutch 265 is engaged (See FIG. 7) . Other than that, in this example, the abnormality of the transmission 260 is detected, and if the abnormality occurs, ISC F/B control is suppressed or stopped (See FIG. 8) .

In the present example, ISC F/B control may or may not be performed while the multiple friction clutch 265 is in the half clutch state.

It should be understood that the embodiments and modification thereof described above are merely exemplary and that further modifications may be made thereto without departing from the scope of the invention as defined by the appended claims.

For example, the vehicle in the present invention may be a two-wheeled motorized vehicle other than a scooter-type vehicle. Specifically, the vehicle of the present invention may be a two-wheeled motorized vehicle of an off-road type, a motorcycle type, a scooter type, or a so-called moped type. Also, other than a two-wheeled motorized vehicle, the vehicle in the invention may be a straddle-type vehicle. Specifically, the vehicle of the present invention may be, for example, an ATV (All Terrain Vehicle) or the like. Further, the vehicle in the invention may be a vehicle other than straddle type vehicle, such as a four-wheeled motorized vehicle.

The transmission may be, for example, an ECVT of a toroidal type.

The engine 10 may be an engine of a type other than a four-cycle engine of a forced air cooling type. For example, the engine 10 may be a water-cooled engine, oil-cooled engine or the like. The engine 10 may be a two-stroke engine, for example.

The conditions for the ISC F/B control may be different from those shown in FIG. 6. The conditions for the ISC F/B control can be appropriately decided depending on a vehicle type or the like.

The "idle rotational speed" indicates the rotational speed of the engine at a time of idling of the vehicle.

"Suppressing the ISC F/B control" indicates decreasing the gain of the ISC F/B control.

The "abnormality in the transmission" indicates that the control of the transmission gear ratio is not performed as usual in the transmission. Specifically, the "abnormality in the transmission" may include a case in which at least one of abnormality in the primary sheave rotation sensor 43 as the input shaft rotational speed sensor, abnormality in the throttle opening degree sensor 18a, abnormality in the vehicle speed sensor 42, abnormality in a transmission mechanism of the transmission 20 excluding the ECU 7, abnormality in the transmission control system including the ECU 7, wiring connecting the ECU 7 and the transmission mechanism, and so forth, abnormality in the sheave position senor 40 as the transmission gear ratio sensor, abnormality in the secondary sheave rotation sensor 41, and the so forth has occurred.

"Clutch engaged or disengaged according to the rotational speed" includes a clutch that is controlled to be engaged or disengaged according to the rotational speed along with the centrifugal clutch that is mechanically engaged or disengaged according to the rotational speed.

The present invention is useful for a vehicle such as a straddle-type vehicle and the like.

### Description of Reference Numerals

- 1: Two-wheeled motorized vehicle
- 2: Engine unit
- 3: Rear wheel (drive wheel)
- 7: ECU (controller)
- 9: ISC device
- 10: Engine
- 11: Crankshaft (input shaft)
- 18a: Throttle opening sensor
- 19: Intake air pressure sensor
- 20: Transmission
- 21: Primary sheave
- 21a: Fixed sheave half
- 21b: Movable sheave half
- 22: Secondary sheave
- 22a: Fixed sheave half
- 22a1: Output shaft
- 22b: Movable sheave half
- 23: V-belt
- 25: Centrifugal clutch
- 25d: First clutch member
- 25e: First clutch member
- 27: Driven shaft
- 28: Speed reduction mechanism
- 29: Axle
- 40: Sheave position sensor
- 41: Secondary sheave rotation sensor
- 42: Vehicle speed sensor
- 43: Primary sheave rotation sensor

## Claims

1. A vehicle (1) comprising:
a drive wheel (3);
an engine (10);
a clutch (25);
an idle speed control device (9) for performing idle speed control to adjust an idle rotational speed of the engine (10); and
an electronic continuously variable transmission (20) having an input shaft (11) and an output shaft (22a1);
**characterised by** further comprising a control unit (7) for suppressing or stopping the idle speed control when the clutch (25) is engaged; wherein
the clutch (25) is located between the output shaft (22a1) and the drive wheel (3) and is adapted to be engaged or disengaged according to the rotational speed of the output shaft (22a1).

2. The vehicle (1) according to Claim 1, wherein the clutch (25) includes a first clutch member (25d) connected directly or indirectly to the output shaft (22a1), and a second clutch member (25e) connected directly or indirectly to the drive wheel (3), wherein the second clutch member (25e) is adapted to be engaged with or disengaged with the first clutch member (25d) according to the rotational speed of the output shaft (22a1), and wherein the control unit (7) determines an engaged or disengaged state of the clutch (25) based on the rotational speed of the first clutch member (25d) or based on the difference of the rotational speed between the first clutch member (25d) and the second clutch member (25e).

3. The vehicle (1) according to any preceding Claim, further comprising:
an input shaft rotational speed sensor for detecting the rotational speed of the input shaft (11);
a throttle opening degree sensor (18a); and
a vehicle speed sensor (42);
wherein the continuously variable transmission (20) further has a transmission control system for controlling the transmission gear ratio, and a transmission gear ratio sensor for detecting the transmission gear ratio.

4. A control method for a vehicle (1), said vehicle comprising:
a drive wheel (3);
an engine (10);
an electronic continuously variable transmission (20) having an input shaft (11) and an output shaft (22a1);
a clutch (25) located between the output shaft (22a1) and the drive wheel (3), and
an idle speed control device (9) for performing idle speed control to adjust an idle rotational speed of the engine (10);
**characterised in that**
the clutch (25) is engaged or disengaged according to the rotational speed of the output shaft (22a1); and
the control method suppresses or stops the idle speed control when the clutch (25) is engaged.

5. The vehicle (1) of any one of claims 1 to 3, and the control method of claim 4, wherein the input shaft (11) of the continuously variable transmission (20) is connected to the engine (10), and the transmission (20) is adapted to adjust a gear ratio between the input shaft (11) and the output shaft (22a1).

## Patentansprüche

1. Fahrzeug (1), umfassend:
ein Antriebsrad (3);
einen Motor (10);
eine Kupplung (25);
eine Leerlaufdrehzahlregelungsvorrichtung (9) zum Ausführen einer Leerlaufdrehzahlsteuerung, um eine Leerlaufdrehzahl des Motors (10) einzustellen; und
ein elektronisches stufenloses Getriebe (20), welches eine Eingangswelle (11) und eine Ausgangswelle (22a1) aufweist;
**dadurch gekennzeichnet, dass** es ferner eine Steuereinheit (7) zum Unterdrücken oder Stoppen der Leerlaufdrehzahlregelung bei eingerückter Kupplung (25) umfasst; wobei
die Kupplung (25) zwischen der Ausgangswelle (22a1) und dem Antriebsrad (3) angeordnet ist und dazu angepasst ist, in Abhängigkeit der Drehzahl der Ausgangswelle (22a1) eingerückt oder ausgerückt zu werden.

2. Fahrzeug (1) nach Anspruch 1, wobei die Kupplung (25) ein erstes Kupplungsglied (25d), welches direkt oder indirekt mit der Ausgangswelle (22a1) verbunden ist, und ein zweites Kupplungsglied (25e) welches direkt oder indirekt mit dem Antriebsrad (3) verbunden ist, umfasst, wobei das zweite Kupplungsglied (25e) dazu angepasst ist, mit dem ersten Kupplungsglied (25d) gemäß der Drehzahl der Ausgangswelle (22a1) eingerückt oder ausgerückt zu werden, und wobei die Steuereinheit (7) einen eingerückten oder ausgerückten Zustand der Kupplung (25) basierend auf der Drehzahl des ersten Kupplungsglieds (25d) oder basierend auf dem Drehzahlunterschied zwischen dem ersten Kupplungsglied (25d) und dem zweiten Kupplungsglied (25e) bestimmt.

3. Fahrzeug (1) nach einem der vorhergehenden Ansprüche, ferner umfassend:
einen Eingangswellendrehzahlsensor zum Detektieren der Drehzahl der Eingangswelle (11);
einen Drosselöffnungsgradsensor (18a); und
einen Fahrzeuggeschwindigkeitssensor (42);
wobei das elektronische stufenlose Getriebe (20) ferner ein Getriebesteuerungssystem zum Steuern der Getriebeübersetzung und einen Getriebeübersetzungssensor zum Detektieren der Getriebeübersetzung aufweist.

4. Steuerverfahren für ein Fahrzeug (1), wobei das Fahrzeug umfasst:
ein Antriebsrad (3);
einen Motor (10);
ein elektronisches stufenloses Getriebe (20), welches eine Eingangswelle (11) und eine Ausgangswelle (22a1) aufweist;
eine Kupplung (25), welche zwischen der Ausgangswelle (22a1) und dem Antriebsrad (3) angeordnet ist, und
eine Leerlaufdrehzahlregelungsvorrichtung (9) zum Ausführen einer Leerlaufdrehzahlsteuerung, um eine Leerlaufdrehzahl des Motors (10) einzustellen;
**dadurch gekennzeichnet, dass**
die Kupplung (25) gemäß der Drehzahl der Ausgangswelle (22a1) eingerückt oder ausgerückt wird; und
das Steuerverfahren die Leerlaufdrehzahlregelung bei eingerückter Kupplung (25) unterdrückt oder stoppt.

5. Fahrzeug (1) nach einem der Ansprüche 1 bis 3, und Steuerverfahren nach Anspruch 4, wobei die Eingangswelle (11) des stufenlosen Getriebes (20) mit dem Motor (10) verbunden ist, und das Getriebe (20) angepasst ist, um eine Getriebeübersetzung zwischen der Eingangswelle (11) und der Ausgangswelle (22a1) einzustellen.

## Revendications

1. Véhicule (1) comprenant:
une roue motrice (3),
un moteur (10),
un embrayage (25),
un dispositif de commande de vitesse de ralenti (9) destiné à exécuter une commande de vitesse de ralenti pour régler une vitesse de rotation au ralenti du moteur (10), et
une transmission électronique à variation continue (20) comportant un arbre d'entrée (11) et un arbre de sortie (22a1),
**caractérisé en ce qu'**il comprend en outre une unité de commande (7) permettant de supprimer ou à stopper la commande de vitesse de ralenti lorsque l'embrayage (25) est embrayé, dans lequel :
l'embrayage (25) est disposé entre l'arbre de sortie (22a1) et la roue motrice (3) et est adapté pour être embrayé ou débrayé en fonction de la vitesse de rotation de l'arbre de sortie (22a1).

2. Véhicule (1) selon la revendication 1, dans lequel l'embrayage (25) inclut un premier élément d'embrayage (25d) connecté directement ou indirectement à l'arbre de sortie (22a1), et un second élément d'embrayage (25e) connecté directement ou indirectement à la roue motrice (3), dans lequel le second élément d'embrayage (25e) est adapté pour être embrayé dans le ou débrayé du premier élément d'embrayage (25d) en fonction de la vitesse de rotation de l'arbre de sortie (22a1), et dans lequel l'unité de commande (7) détermine un état embrayé ou débrayé de l'embrayage (25) en fonction de la vitesse de rotation du premier élément d'embrayage (25d) ou en fonction de la différence de vitesse de rotation entre le premier élément d'embrayage (25d) et le second élément d'embrayage (25e).

3. Véhicule (1) selon l'une quelconque des revendications précédentes, comprenant en outre :
un capteur de vitesse de rotation de l'arbre d'entrée destiné à détecter la vitesse de rotation de l'arbre d'entrée (11),
un capteur de degré d'ouverture de papillon des gaz (18a), et
un capteur de vitesse du véhicule (42),
dans lequel la transmission à variation continue (20) comporte en outre un système de commande de transmission pour commander le rapport de transmission et un capteur de rapport de transmission pour détecter le rapport de transmission.

4. Procédé de commande d'un véhicule (1), ledit véhicule comprenant :
une roue motrice (3),
un moteur (10),
une transmission électronique à variation continue (20) comportant un arbre d'entrée (11) et un arbre de sortie (22a1),
un embrayage (25) disposé entre l'arbre de sortie (22a1) et la roue motrice (3), et
un dispositif de commande de vitesse de ralenti (9) destiné à exécuter une commande de vitesse de ralenti pour régler une vitesse de rotation au ralenti du moteur (10), et
**caractérisé en ce que**
l'embrayage (25) est embrayé ou débrayé en fonction de la vitesse de rotation de l'arbre de sortie (22a1), et
le procédé de commande supprime ou stoppe la commande de vitesse de ralenti lorsque l'embrayage (25) est embrayé.

5. Véhicule (1) selon l'une quelconque des revendications 1 à 3, et procédé de commande selon la revendication 4, dans lequel l'arbre d'entrée (11) de la transmission à variation continue (20) est connecté au moteur (10), et la transmission (20) est adaptée pour régler un rapport de transmission entre l'arbre d'entrée (11) et l'arbre de sortie (22a1).
